# EUROPEAN PATENT APPLICATION

(11) **EP 4 567 740 A1**
(43) Date of publication of application: **11.06.2025**
(21) Application number: 23214153.1
(22) Date of filing: 05.12.2023
(51) Int. Cl.: G06T 19/20

(54) **MODIFYING A MODEL ASSOCIATED WITH ANATOMICAL STRUCTURES**

(71) Applicant: Koninklijke Philips N.V., 5656 AG Eindhoven (NL)
(72) Inventor: BLITZ, Alexandra, 5656 AG Eindhoven (NL); SEDLMEIER, Anke, 5656 AG Eindhoven (NL); BLANKENHAGEN, Michael, 5656AG Eindhoven (NL)
(74) Representative: Philips Intellectual Property & Standards

(57) **Abstract**

According to an aspect, there is provided a computer-implemented method (200) comprising: receiving (202) an anatomical model of an anatomical structure, the anatomical model comprising a region having a first contour comprising a first plurality of points; receiving (204) a reference model having a second contour comprising a second plurality of points, each point of the second plurality being in correspondence with a respective point of the first plurality; positioning (206) the reference model with respect to the region of the anatomical model such that each point of the second plurality is offset a predetermined distance from its corresponding point of the first plurality; and providing (208) a user control enabling a user to modify a relative angular position of a first point of the second plurality around the position of its corresponding point of the first plurality in a plane containing the first point of the second plurality and said corresponding point of the first plurality.

## Description

### FIELD OF THE INVENTION

The invention relates to anatomical models of anatomical structures and, in particular, to methods and apparatuses for manipulating a reference model relative to such an anatomical model.

### BACKGROUND OF THE INVENTION

In some medical scenarios, computer models are used to view or measure parts of a body (e.g., of a human or animal) and/or simulate a procedure to be carried out in respect of the body part. For example, prior to performing a particular medical procedure, it may be advantageous to use a computer model to measure an anatomical structure in a person's body.

In one example, an annuloplasty procedure may be performed in relation to a tricuspid valve of a person's heart. Such a procedure involves attaching an implant (e.g., an annuloplasty band) to the right atrium of the person's heart. Prior to performing the procedure, there is a need to measure a circumference part of the circumference) of the right atrium with a fixed distance (e.g., a distance of 4mm according to one example) along the atrial wall from the segmented tricuspid annulus.

Such measurements are historically performed manually by a medical professional. However, such a manual measurement may be inaccurate, for example if the medical professional measures the fixed distance inaccurately. An inaccurate measurement can lead to the selection of an inappropriately sized annuloplasty band, which could lead to delays while a more appropriately-sized band is sourced. In another example, the inappropriately-sized band may be implanted into the subject, leading to a poor outcome from the procedure.

It would therefore be desirable to have an improved way of viewing an anatomical model of an anatomical structure of a subject, and a more accurate way of measuring and/or manipulating such a model.

### SUMMARY OF THE INVENTION

The inventors of the present disclosure have identified a downside of existing methods of exploring anatomical objects of a subject, due to the possible inaccuracies and potential errors in identifying particular areas or regions of the anatomical object and, in some cases, performing measurements or other tasks in respect of the anatomical object, for example prior to performing a medical procedure. The inventors have recognised that one or more of the above-identified issues can be mitigated or overcome by introducing a mechanism that enables accurate exploration and/or manipulation of a computer model of an anatomical object or structure. Specifically, a solution identified by the inventors involves introducing a reference model that is positioned with respect to the part of an anatomical model of an anatomical structure, and enabling a user to manipulate parts of the reference model within defined constraints that serve to maintain a degree of accuracy.

According to a first specific aspect, there is provided a computer-implemented method comprising receiving an anatomical model of an anatomical structure, the anatomical model comprising a region having a first contour comprising a first plurality of points; receiving a reference model having a second contour comprising a second plurality of points, each point of the second plurality being in correspondence with a respective point of the first plurality; positioning the reference model with respect to the region of the anatomical model such that each point of the second plurality is offset a predetermined distance from its corresponding point of the first plurality; and providing a user control enabling a user to modify a relative angular position of a first point of the second plurality around the position of its corresponding point of the first plurality in a plane containing the first point of the second plurality and said corresponding point of the first plurality.

By providing a mechanism allowing a user to modify an angular position of a point in the second plurality of points relative to the position of its corresponding point in the first plurality of points, it is possible to accurately adjust the reference model as desired. This can be particularly beneficial when the anatomical model is small, or when then the predetermined distance between corresponding points of the first and second pluralities is small, for example.

In some embodiments, the plane may be substantially transversal to a best fit plane of the first contour.
The method may, in some embodiments, further comprise providing data indicative of the relative positions of the first point of the second plurality and its corresponding point of the first plurality for presentation to a user.

In some embodiments, the method may further comprise receiving, via the user control, an indication of a modification of the relative angular position of a given point of the second plurality around the position of its corresponding point of the first plurality.

The method may further comprise, responsive to receiving an indication of a modification of the relative angular position of the given point of the second plurality, adjusting a position of at least one point of the second plurality adjacent to the given point.

In some embodiments, an amount of adjustment of the position of the at least one point of the second plurality is in accordance with a Gaussian distribution.
Positioning the reference model with respect to the region of the anatomical model may, in some embodiments, comprise estimating an initial position of each point of the second plurality of points relative to its corresponding point of the first plurality.

In some embodiments, the second contour may be an open contour. As an example, the second contour may be substantially c-shaped.
The method may, in some embodiments, further comprise providing a user control enabling a user to modify a position of at least one end point of the second plurality of points of the second contour.

In some embodiments, the reference model comprises a model of an anatomical implant. The method may further comprise determining, based on the positions of the points of the second plurality, a length of the anatomical implant.

According to a second specific aspect, there is provided an apparatus comprising a processor configured to perform the steps of the methods disclosed herein.
In some embodiments, the apparatus may further comprise a display configured to display a representation of at least part of the anatomical structure, an indication of the first point of the second plurality of points relative to the anatomical structure and the corresponding point of the first plurality of points relative to the first point and to the anatomical structure.

The apparatus may further comprise a user interface configured to enable a user to modify at least one of: a relative angular position of the first point of the second plurality around the position of its corresponding point of the first plurality; a position of one or more points of the first plurality of points; and a position of one or more points of the second plurality of points.

According to a third specific aspect, there is provided a computer program product comprising a non-transitory computer-readable medium, the computer-readable medium having computer-readable code embodied therein, the computer-readable code being configured such that, on execution by a suitable computer or processor, the computer or processor is caused to perform steps of the methods disclosed herein.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 is an illustration of an example of an anatomical model and a reference model with an anatomical structure;
Fig. 2 is a flowchart of an example of a method according to various embodiments;
Fig. 3 is an illustration of an example of an anatomical model and a reference model;
Fig. 4 is a flowchart of a further example of a method according to various embodiments;
Fig. 5 is an illustration of an example of a part of a reference model being manipulated relative to a scan of an anatomical structure;
Fig. 6 is a schematic illustration of an example of an apparatus according to various embodiments; and
Fig. 7 is a schematic illustration of an example of a computer-readable medium in communication with a processor.

### DETAILED DESCRIPTION OF EMBODIMENTS

According to various embodiments disclosed herein, the present disclosure provides a mechanism that enables a user to view, explore and accurately manipulate and/or measure part of a reference model relative to an anatomical model of an anatomical structure of a subject. In this way, the user is able to manipulate a part or parts of the reference model within one or more defined constraints as may be required by the circumstances (e.g., in view of a medical procedure to be performed).

Examples disclosed herein may be applied to a wide range of scenarios. One specific example discussed herein relates to an annuloplasty procedure, which is used to reinforce or tighten a valve of a subject's heart. Transcatheter valve procedures are becoming more common in medical practice, and an annuloplasty procedure may be applied to an extensively dilated tricuspid valve, where repair or replacement may no longer be feasible. Such a procedure requires extensive planning, which may be performed using a computerised tomography (CT) scan and/or echocardiography. The procedure requires a device (e.g., an annuloplasty band) to be implanted in a specific location relative to the valve, and prior to this, a cardiologist must determine the precise length of the device as well as the placement location. In one example, a band suitable for use in such a procedure requires around 40 screws to be placed at precise positions along the length of the annuloplasty band, which itself must be sized correctly to match the length of the existing annulus.

The annuloplasty band should be fitted at a precise distance of 4 mm from the existing annulus along a variable right atrial wall, and it can be difficult to perform such measurements manually in an accurate and in a reproducible manner.

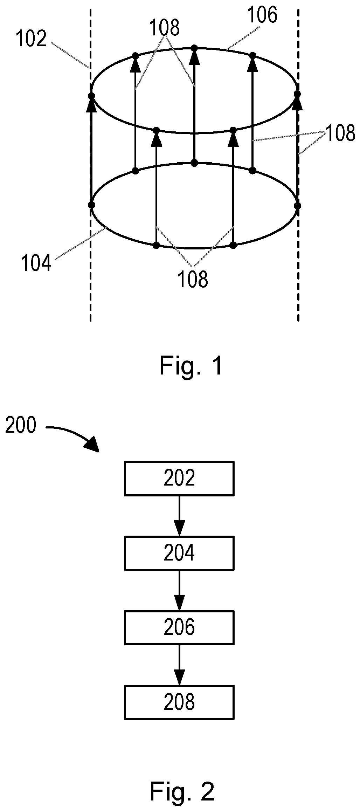

Referring now to the drawings, Fig. 1 shows an example of part of an anatomical structure 102 with an anatomical model 104 and a reference model 106. The anatomical structure 102 may be any anatomical structure or object of a subject (e.g., a human or an animal), such as a valve of the subject's heart. The anatomical model 104 may be a computer-generated model generated based on a scan of the anatomical structure, for example. In the example shown in Fig. 1, the anatomical structure 102 is substantially cylindrical in shape and, therefore, the anatomical model 104 is substantially ring-shaped in this example. The reference model 106 is a computer-generated model that may be based on the anatomical structure 102 and/or on the anatomical model 104. In some examples, the reference model 106 may be based on a template or on previous reference models used for similar purposes or in respect of similar anatomical structures. In the example shown in Fig. 2, the reference model 106 is substantially the same shape as the anatomical model 104 (e.g., ring-shaped). However, as will be apparent from other examples discussed herein, the reference model 106 may have a shape that differs from the shape of the anatomical model 104. For example, the reference model 106 may have a shape that matches or is based on part of the anatomical model 104.

The reference model 106 may be used for various purposes. In one example, the reference model 106 may be used to measure the size of part of an anatomical structure at a particular location (e.g., at a particular location relative to the anatomical model 104). In another example, as discussed above, the reference model 106 may be used to represent the position of an implant to be fitted to the anatomical structure 102 in a particular position relative to the anatomical model 104. In either example, the reference model 106 may be positioned a defined or fixed distance from the anatomical model 104, as represented in Fig. 1 by arrows 108. Each arrow 108 has a defined length, such that the reference model 106 is positioned at a constant distance from the anatomical model 104 along its length. In some examples, the defined separation between the reference model 106 and the anatomical model 104 may vary at different positions, such that part of the reference model 106 is separated from the anatomical model by a first distance while another part of the reference model is separated from the article model by a second distance, different from the first distance.

Each of the anatomical model 104 and the reference model 106 may have at least a portion that comprises or follows a contour. For example, in the example shown in Fig. 1, the anatomical model 104 as a contour that substantially follows a wall of the anatomical structure 102. The contour of the reference model 106 may, for example, be based on the contour of the anatomical model 104, separated by the defined distance as discussed above.

According to a first aspect, the present invention provides a method. Embodiments disclosed herein provide a mechanism by which a user is able to manipulate the reference model 106, as discussed below with reference to Fig. 2.

Fig. 2 is a flowchart of an example of a method 200. The method 200 may comprise a computer-implemented method for manipulating a model. One or more steps of the methods disclosed herein may be performed using a processor or multiple processors, such as the processor(s) disclosed herein. The processor or processors may form part of one or more computing devices or servers, for example as part of a cloud-computing environment.

The method 200 comprises, at step 202, receiving an anatomical model 104 of an anatomical structure 102, the anatomical model comprising a region having a first contour comprising a first plurality of points. The anatomical model 104 may be received from a storage device (e.g., a memory) of a computing device, where various anatomical models may be stored, for example in a database. In some examples, a processor may obtain (e.g., be sent) the anatomical model 104 in response to a request indicating the nature or type of anatomical model that is desired. The anatomical model 104 may comprise a model of an entire body part or anatomical structure, or it may comprise a specific part or region of the body part or anatomical structure.

The anatomical model 104 comprises a region that has a first contour comprising a first plurality of points. For example, a region of the anatomical model 104 may represent a cylindrical wall of a valve of a subject's heart, and this region of the anatomical model may include a contour extending around the cylindrical wall. The contour may, for example, be represented by a line following a path. This contour includes a plurality of points which may, for example, be spaced along the contour or line, following the same path. The contour may include any number of points in the plurality of points. However, as will become apparent, the plurality of points on the contour are used for manipulation of the reference model 106 relative to the anatomical model 104 and, therefore, a larger the number of points in the plurality of points gives rise to a greater level of control by a user over the manipulation of the reference model.

At step 204, the method 200 comprises receiving a reference model 106 having a second contour comprising a second plurality of points, each point of the second plurality being in correspondence with a respective point of the first plurality. As with the anatomical model 104, the reference model 106 includes a contour (i.e., the second contour) also having a plurality of points (i.e., the second plurality of points). The number of points in the second plurality of points may be the same as the number of points in the first priority of points. In some examples, the contour of the reference model 106 may have a shape similar to, or substantially the same as, the shape of the contour of the anatomical model 104, as shown in the example of Fig. 1.

The method 200 comprises, at step 206, positioning the reference model 106 with respect to the region of the anatomical model 104 such that each point of the second plurality is offset a predetermined distance from its corresponding point of the first plurality. As shown in the example of Fig. 1, the reference model 106 may be positioned such that each point along the contour of the reference model is spaced apart by a predetermined or predefined distance (e.g., the distance indicated by the arrows 108 in Fig. 1) from its corresponding point of the first plurality of points in the region of the anatomical model. The predetermined distance may be set automatically (e.g., based on literature), or may be defined manually, for example by a user selecting a distance or entering a distance using a user interface. The term "offset" as used herein may be intended to mean "separated by".

At step 208, the method 200 comprises providing a user control enabling a user to modify a relative angular position of a first point of the second plurality around the position of its corresponding point of the first plurality in a plane containing the first point of the second plurality and said corresponding point of the first plurality. The user control may be provided by means of a user interface for user input device, such as a keyboard, a mouse or a touchpad or touchscreen. Through the user control, a user may modify the angular position of a first point of the second plurality (i.e., a first point in the reference model 106) relative to its corresponding point of the first plurality (i.e., its corresponding point in the anatomical model 104). In other words, the position of the corresponding point in the first plurality may remain fixed, and a user may modify the angular position of the first point in the second plurality by rotating it about the position of the corresponding point in the first plurality. The rotation of the angular position of the first point in the second plurality is restricted to a plane that contains both the first point in the second plurality and its corresponding point in the first plurality.

The first contour of the anatomical model 104 may lie substantially in a plane, or a best fit plane may be fitted to the first contour. For example, the best fit plane may be the plane in which the anatomical model lies. In some embodiments, the plane containing the first point and the corresponding point may be transversal or substantially transversal to the best fit plane of the first contour. In this way, the position of the first point of the second plurality relative to the position of its corresponding point of the first plurality is restricted to a circle in a plane that is substantially transversal to the best fit plane of the first contour at the position of the corresponding point of the first plurality. In some embodiments, the plane containing the first point and the corresponding point may be substantially transversal to the second contour at the first point of the second contour. A plane that is "transversal" to the best fit plane of the first contour (according to the meaning as intended herein) creates an angle between the plane and the best fit plane of the first contour of 90 degrees. In other words, the plane is perpendicular to the best fit plane of the first contour. A plane that is "substantially transversal" to the best fit plane of the first contour (according to the meaning as intended herein) creates an angle between the plane and the best fit plane of the first contour of approximately 90 degrees. The angle between the plane and best fit plane of the first contour may be within a range of +/-5 degrees from the perpendicular, within a range of +/-10 degrees from the perpendicular, within a range of +/-5% of a 90-degree angle, within a range of +/-10% of a 90-degree angle, or the like. It will be apparent that modification of the position of the first point of the second plurality (i.e., of the reference model 106) by rotating it about the position of its corresponding point of the first plurality (i.e., of the anatomical model 104) changes the shape of the second contour (i.e., the contour of the reference model 106). Further changes in the shape of the second contour will result if the positions of other points in the second plurality are also modified.

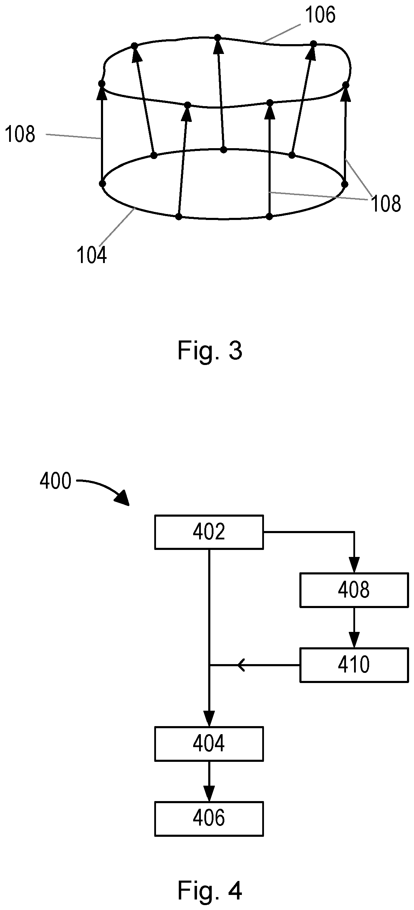

Fig. 3 is an illustration of an example of an anatomical model 104 and a reference model 106 following manipulation of part of the reference model. The example shown in Fig. 3 is based on the example shown in Fig. 1. In the example shown in Fig. 3, however, the relative angular positions of one or more points in the second plurality (i.e., of the reference model 106) have been modified around the positions of their corresponding points of the first plurality (i.e., of the anatomical model 104). As a result, the shape of the contour of the anatomical model 104 in Fig. 3 remains unchanged relative to its shape in Fig. 1, while the shape of the contour of the reference model 106 in Fig. 3 is modified relative to its shape in Fig. 1.

Additional method steps may be performed in addition to those shown in Fig. 2. Fig. 4 is a flowchart of a further example of a method 400, which includes various steps that may optionally be performed. Steps of the method 400 may be performed after the steps 202 to 208 of the method 200 discussed above.

To enable easy and accurate modification and manipulation of the position of points in the contour of the reference model 106, data representing the anatomical model 104, the reference model, the contours and the points of those contours may be provided for display to the user. Thus, the method 400 may comprise, at step 402, providing data indicative of the relative positions of the first point of the second plurality and its corresponding point of the first plurality for presentation to a user. In some embodiments, just the positions of the first point of the second plurality and it corresponding point of the first plurality may be presented to the user while, in other embodiments, positions of other points in the first plurality and/or the second plurality may additionally be presented to the user. The step 402 of providing data for presentation to the user may comprise providing the data for presentation on a display, such as a display screen of a computing device. In other examples, the data may be provided for display in some other format, such as in a 3D environment, or in an augmented reality environment, for example.

Further to the provision of a user control at step 208 of the method 200, the method 400 may further comprise, at step 404, receiving, via the user control, an indication of a modification of the relative angular position of a given point of the second plurality around the position of its corresponding point of the first plurality. In other words, the processor performing the method 400 may receive data indicative of the user control via which the angular position of a point of the second plurality is modified. As indicated above, in one example, modification of the angular position of a point in the second plurality of points may be effected by a user selecting the point on a screen (e.g., with a cursor), and dragging the given point of the second plurality of points into its desired position. In another example, a user may scroll bar or a dial presented on the screen to adjust the relative rotation of the given point of the second plurality about its corresponding point of the first plurality.

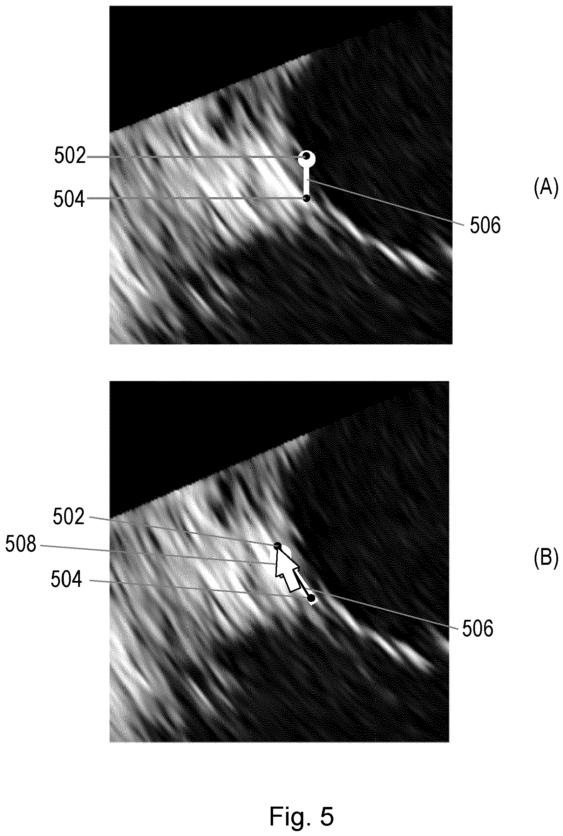

Fig. 5 is an illustration of an example of part of a reference model being manipulated relative to a scan of an anatomical structure. Fig. 5A and 5B are images of a scan of a portion of an anatomical structure. In Fig. 5A, a first point 502 of the second plurality of points (i.e., of the reference model 106) is indicated along with its corresponding point 504 of the first plurality of points (i.e., of the anatomical model 104). The first point 502 and its corresponding point 504 are connected by a marker or indicator 506, which represents the predetermined distance or separation between the first point 502 and the corresponding point 504. In Fig. 5A, the position of the corresponding point 504 is determined by the position of the first contour (i.e., the contour of the anatomical structure). The first point 502 in Fig. 5A is shown in a default position relative to the corresponding point 504 which, in this example, is directly above the first point.

Fig. 5B shows an example in which a cursor 508 is used (e.g., operated by a user) to drag the position of the first point 502 in order to modify the relative angular position of the first point around the position of its corresponding point 504. In this example, the position of the first point 502 has been moved to the left, representing an anticlockwise rotation relative to the corresponding point 504. The nature of the modification of the position of the first point 502 may be made depend on the intended purpose. In one example, in which the reference model 106 represents the position of an annuloplasty ring to be implanted, it may be desirable to position the points of the second plurality of points (e.g., the point 502) such that the first point 502 and its corresponding point 504 are separated from one another along a line that is substantially parallel to the wall of the anatomical structure shown, as shown in the example in Fig. 5B.

Referring again to Fig. 4, once an indication of a modification has been received via the user control, the method 400 may comprise providing data indicative of the modification for presentation to a user.

In some embodiments, adjustment of one point in the second plurality of points (i.e., in the contour of the reference model 106) may result in the automatic modification of other points in the second plurality. Thus, at step 406, the method 400 may comprise, responsive to receiving an indication of a modification of the relative angular position of the given point of the second plurality, adjusting a position of at least one point of the second plurality adjacent to the given point. In this way, modifying the position of one point in the contour of the reference model 106 will result in one or more adjacent or nearby points in the contour to be modified in a similar manner, as if the points are connected to one another by a piece of string or elastic. Put another way, modifying the position of the given point in the contour of the reference 106 can influence the position of one or more points near to, or in the vicinity of, the given point. This has the benefit that a user is not required to adjust the angular position of every single point in the second plurality; adjusting one point's position will cause an adjacent point's position to be adjusted accordingly, automatically. The point or points whose position or positions are influenced may be chosen by the user or preprogrammed. In some examples, the positions of a defined number of points either side of the given point may be adjusted while, in other examples, the positions of points within a defined distance of the given point along the contour may be adjusted. This can lead to a more realistic modification of the contour, and can avoid unrealistic or extreme outlier points in the contour.

In some embodiments, an amount of adjustment of the position of the at least one point of the second plurality may be in accordance with a Gaussian distribution. In other words, modification of the position of the given point may result in a relatively larger adjustment of the positions of points immediately adjacent to the given point, and a relatively smaller adjustment of the positions of points that are further away from the given point. Using a Gaussian distribution to adjust the adjacent points can help to make the adjustments more realistic, in a way that is likely to correspond to the contour of the anatomical model, avoiding sharp points from occurring in the second contour.

It is noted above with reference to Fig. 5A that the first point 502 may be in a default position relative to the corresponding point 504 when the reference model 106 is positioned with respect to the region of the anatomical model (step 206). This may be true of all points in the reference model 106. Thus, positioning the reference model with respect to the region of the anatomical model (step 206 of the method 200) may comprise estimating an initial position of each point of the second plurality of points relative to its corresponding point of the first plurality. The estimated initial position of each point may be based on a default position or on a predefined position depending on the nature of the anatomical structure or the anatomical model 104. Estimating the initial position can help to free up time of the user, as the user does not need to indicate the initial position for each point in the reference model. Automatic placement can also improve accuracy.

In the example shown in Figs. 1 and 3, the reference model 106 includes a closed contour (e.g., a ring). In other examples, however, the second contour may be an open contour. In such an example, the contour may have a first end at a first end point of the second plurality of points and a second end at a second end point of the second plurality of points. In one example, the second contour may be substantially c-shaped. In examples where the second contour is an open contour, the position of one or both endpoints of the contour may be defined or selected by a user, for example by a user indicating the intended endpoint(s) on a representation of the reference model 106 on a screen. Thus, the method 400 may comprise, at step 408, providing a user control enabling a user to modify a position of at least one end point of the second plurality of points of the second contour.

As noted above, the methods disclosed herein may be used for a wide range of purposes. In one example, the reference model 106 may represent a medical apparatus, such as an anatomical implant to be applied to all positioned relative to the region of the anatomical structure. In such an example, the methods disclosed herein may be used to determine one or more dimensions of the anatomical implant based on the anatomical structure of the subject. By performing the disclosed methods, it is possible to accurately determine a size and/or shape of the anatomical implant prior to being implanted in the subject. In this way, the likelihood of implanting an ill-fitting device or implant can be greatly reduced. Thus, in some embodiments, the reference model 106 may comprise a model of an anatomical implant. The method 400 may further comprise, at step 410, determining, based on the positions of the points of the second plurality, a length of the anatomical implant.

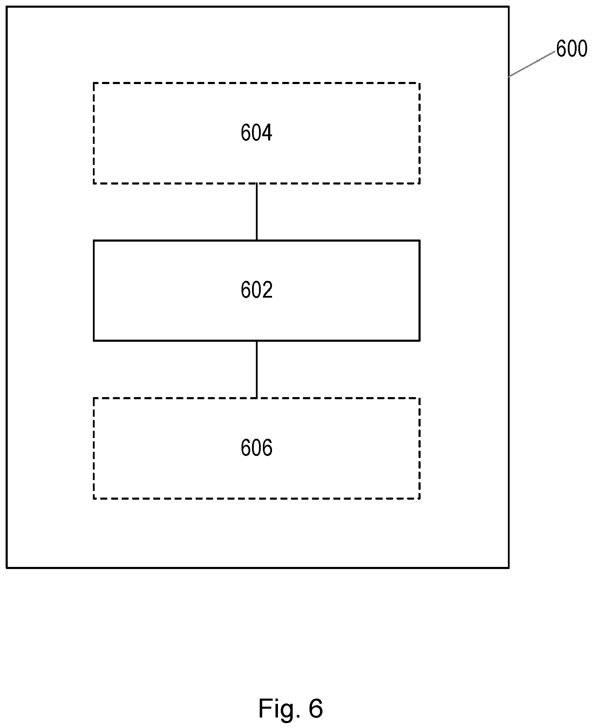

According to another aspect, the present invention provides an apparatus. Fig. 6 is a schematic illustration of an example of an apparatus 600. The apparatus 600 may be used to perform the methods disclosed herein. The apparatus 600 comprises a processor 602 configured to perform steps of the methods 200, 400 disclosed herein. In some examples, the apparatus 600 may be a computing device, such as a workstation, a desktop computer, a laptop computer, a tablet computer, a smart phone or a wearable device, or the apparatus may comprise a device forming part of a cloud-computing environment, such as a server.

In some embodiments, the apparatus 600 may further comprise a display 604. The display 604 may be configured to display a representation of at least part of the anatomical structure, an indication of the first point of the second plurality or points relative to the anatomical structure and the corresponding point of the first plurality of points relative to the first point and to the anatomical structure. The display 604 may, for example, be configured to display images similar to those shown in Fig. 5. The apparatus 600 may, in some embodiments, further comprise a user interface 606. The user interface 606 may be configured to enable a user to modify at least one of: a relative angular position of the first point of the second plurality around the position of its corresponding point of the first plurality; a position of one or more points of the first plurality of points; and a position of one or more points of the second plurality of points. Modifying the position of one or more points using the user interface may be achieved in the manner disclosed herein.

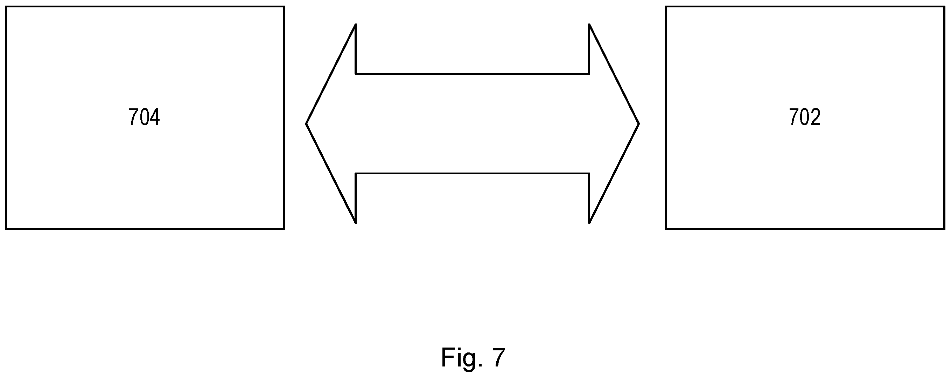

According to another aspect, the present invention provides a computer program product. Fig. 7 is a schematic illustration of an example of a processor 702 in communication with a computer-readable medium 704. The processor 702 may comprise or be similar to the processor 602 discussed above. According to some embodiments, a computer program product comprises a non-transitory computer-readable medium 704, the computer-readable medium having computer-readable code embodied therein, the computer-readable code being configured such that, on execution by a suitable computer or processor 702, the computer or processor is caused to perform steps of the methods 200, 400 disclosed herein.

Thus, embodiments disclosed herein provide a mechanism by which a reference model 106 can be manipulated by a user (e.g., to fit a particular part of anatomical structure) while maintaining a particular distance or position relative to anatomical model 104. By enabling a user to view and modify the reference model in the manner disclosed herein, accurate positioning can be achieved, which can lead to accurate measurements being made, for example in advance of a medical procedure.

The processor 602, 702 can comprise one or more processors, processing units, multicore processors or modules that are configured or programmed to control the apparatus 600 in the manner described herein. In particular implementations, the processor 602, 702 can comprise a plurality of software and/or hardware modules that are each configured to perform, or are for performing, individual or multiple steps of the method described herein.

The term "module", as used herein is intended to include a hardware component, such as a processor or a component of a processor configured to perform a particular function, or a software component, such as a set of instruction data that has a particular function when executed by a processor.

It will be appreciated that the embodiments of the invention also apply to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to embodiments of the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g., Java interpreter instructions). Alternatively, one or more or all of the sub-routines may be stored in at least one external library file and linked with a main program either statically or dynamically, e.g., at run-time. The main program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method (200) comprising:
receiving (202) an anatomical model of an anatomical structure, the anatomical model comprising a region having a first contour comprising a first plurality of points;
receiving (204) a reference model having a second contour comprising a second plurality of points, each point of the second plurality being in correspondence with a respective point of the first plurality;
positioning (206) the reference model with respect to the region of the anatomical model such that each point of the second plurality is offset a predetermined distance from its corresponding point of the first plurality; and
providing (208) a user control enabling a user to modify a relative angular position of a first point of the second plurality around the position of its corresponding point of the first plurality in a plane containing the first point of the second plurality and said corresponding point of the first plurality.

2. A computer-implemented method (200, 400) according to claim 1, wherein the plane containing the first point and the corresponding point is substantially transversal to a best fit plane of the first contour.

3. A computer-implemented method (200, 400) according to claim 1 or claim 2, further comprising:
providing (402) data indicative of the relative positions of the first point of the second plurality and its corresponding point of the first plurality for presentation to a user.

4. A computer-implemented method (200, 400) according to any preceding claim, further comprising:
receiving (404), via the user control, an indication of a modification of the relative angular position of a given point of the second plurality around the position of its corresponding point of the first plurality.

5. A computer-implemented method (200, 400) according to claim 4, further comprising:
responsive (406) to receiving an indication of a modification of the relative angular position of the given point of the second plurality, adjusting a position of at least one point of the second plurality adjacent to the given point.

6. A computer-implemented method (200, 400) according to claim 5, wherein an amount of adjustment of the position of the at least one point of the second plurality is in accordance with a Gaussian distribution.

7. A computer-implemented method (200, 400) according to any preceding claim, wherein positioning the reference model with respect to the region of the anatomical model comprises estimating an initial position of each point of the second plurality of points relative to its corresponding point of the first plurality.

8. A computer-implemented method (200, 400) according to any preceding claims, wherein the second contour is an open contour.

9. A computer-implemented method (200, 400) according to any preceding claims, wherein the second contour is substantially c-shaped.

10. A computer-implemented method (200, 400) according to claim 8 or claim 9, further comprising:
providing (408) a user control enabling a user to modify a position of at least one end point of the second plurality of points of the second contour.

11. A computer-implemented method (200, 400) according to any preceding claims, wherein the reference model comprises a model of an anatomical implant, and the method further comprising:
determining (410), based on the positions of the points of the second plurality, a length of the anatomical implant.

12. An apparatus (600) comprising:
a processor (602) configured to perform the method (200, 400) according to any of the preceding claims.

13. An apparatus (600) according to claim 12, further comprising:
a display (604) configured to display a representation of at least part of the anatomical structure, an indication of the first point of the second plurality of points relative to the anatomical structure and the corresponding point of the first plurality of points relative to the first point and to the anatomical structure.

14. An apparatus (600) according to claim 12 or claim 13, further comprising:
a user interface (606) configured to enable a user to modify at least one of:
a relative angular position of the first point of the second plurality around the position of its corresponding point of the first plurality;
a position of one or more points of the first plurality of points; and
a position of one or more points of the second plurality of points.

15. A computer program product comprising a non-transitory computer-readable medium (704), the computer-readable medium having computer-readable code embodied therein, the computer-readable code being configured such that, on execution by a suitable computer or processor (702), the computer or processor is caused to perform the method of any of claims 1 to 11.
